# EUROPEAN PATENT SPECIFICATION

(11) **EP 2 063 560 B1**
(45) Date of publication and mention of the grant of the patent: **01.02.2012**
(21) Application number: 08169437.4
(22) Date of filing: 19.11.2008
(51) Int. Cl.: H04J 3/06

(54) **Method for reconstructing client clocks**
Verfahren zur Rückgewinnung von Kundentakten
Procédé de reconstruction d'horloges de clients

(30) Priority: 21.11.2007 FR 0759192
(43) Date of publication of application: 27.05.2009
(73) Proprietor: Alcatel Lucent, 75008 Paris (FR)
(72) Inventor: Krivosic, Pierre, MURRAY HILL, NJ 07974-0636 (US); Macheda, Gianluca, CASATENOVO (LECCO), 23880 (IT)
(74) Representative: Shamsaei Far, Hassan

(56) References cited:
- US-A1- 2004 086 003
- US-A1- 2004 086 029
- GONZALES J ET AL: "Jitter reduction in ATM networks" COMMUNICATIONS - RISING TO THE HEIGHTS. DENVER, JUNE 23 - 26, 1991; [PROCEEDINGS OF THE INTERNATIONAL CONFERENCE ON COMMUNICATIONS], NEW YORK, IEEE, US, vol. -, 23 June 1991 (1991-06-23), pages 274-279, XP010044106 ISBN: 978-0-7803-0006-4
- LAU R C ET AL: "SYNCHRONOUS TECHNIQUES FOR TIMING RECOVERY IN BISDN" IEEE TRANSACTIONS ON COMMUNICATIONS, IEEE SERVICE CENTER, PISCATAWAY, NJ, US, vol. 43, no. 2/04, PART 03, 1 February 1995 (1995-02-01), pages 1810-1818, XP000505653 ISSN: 0090-6778

## Description

The invention pertains to communication networks capable of carrying multiplexed signals from traffic streams of different types within a single channel.

As is known to a person skilled in the art, certain communication networks enabling traffic (or service) aggregation must carry different types of traffic streams, i.e. transmitted using different transport protocols, such as SONET/SDH, Ethernet and Fibre Channel (ANSI X3T11 - storage technology), over a single channel. This is advantageous, particularly for issues of form factor and cost, as it makes it possible to use a single platform to carry out mixed processing functions, independent of the transport protocols used by the various clients of the network. However, this makes it necessary to transport each client's clock as a complement to its traffic streams, and to reconstruct each clock upon reception.

In order to reconstruct the client clock upon reception in this manner, it is known to use a voltage controlled oscillator (or VCO) with a specific flow that depends upon the transfer protocol used by the client. However, this requires that the VCO is paired with a processing card (or board) dedicated specifically to the client's transport protocol. In this manner, it may, for example, be necessary to use, at reception, a VCO coupled with a SONET/SDH line card or an Ethernet line card (or a GBE (Gigabit Ethernet) or a line card for Fibre Channel. It is also known to use, at reception, a multi-flow line card coupled, via a switch, with a set of VCOs, in such a way as to select and activate the VCO which corresponds to the client's transport protocol.

These two solutions are not entirely satisfactory, because they lack flexibility with respect to the cards, and because they have a low integration level, which does not fulfill the clients' needs well. Furthermore, they make development and manufacturing more complex. Additionally, increasing the number of VCOs raises costs.

A document, entitled "Jitter reduction in ATM networks" by Gonzalez et al, COMMUNICATIONS- RISING TO THE HEIGHTS DENVER, JUNE 23 - 26, 1991, NEW YORK, IEEE, US, pages 274-279 relates to a method for reducing jitter which consists in transmitting the phase information form the plesiochronous source measured by a reference clock. According to this document, such information is protected against transmission errors and cell loss.

A document entitled "SYNCHRONOUS TECHNIQUES FOR TIMING RECOVERY IN BISDN" by LAU R C et al, IEEE TRANSACTIONS ON COMMUNICATIONS, IEEE SERVICE CENTER, PISCATAWAY, NJ, US, vol. 43, no. 2/04. Part 03, 1 February 1995, pages 181061818 relates to comparing several method for timing recovery in a synchronous network environment and identifies one a most efficient.

US 2004/086003 relates to a transceiver system and method supporting variable rates and multiple protocols wherein data can be received at a first data rate and transmitted at a second data rate. The transceiver device comprises a first interface for receiving data at one data rate a mapper that can map data from a first rate to the second rate, and a second interface for transmitting the data at the second data rate.

US2004/086029 relates to a transceiver system and method supporting muttipte selectable voltage controlled oscillators in which a phase lock loop comprising as plurality of voltage controlled oscillators is disclosed. The phase lock toop can provide a wide range of output frequencies with low jitter. Additionally, the phase lock loop can be incorporated into a clock multiplier unit and clock and data recovery unit.

The purpose of the invention is therefore to improve the situation.

To that end, it discloses a method dedicated to reconstructing the clock of a client which uses a transport protocol (chosen from a set) for transporting signals between devices, via a communication network capable of transporting multiplexed signals using every transport protocol in the set.

This method is characterized by the fact that it consists of:
- on the sending end, estimating the phase of the client's clock, in such a way as to generate at least the first samples of a timestamp which represents that estimated phase, then transmitting these first samples to a reception device, via the network, and
- when the first samples are received in the receiving device, i) determining the difference between the estimated phase (which is represented by the received first samples), and the phase of a local clock (whose frequency is generated by a digital frequency synthesizer), with this latter phase being represented by a timestamp defined by second samples; ii) generating a sampled error signal representative of this difference in phase, and iii) filtering this error signal by frequency in such a way as to supply the digital frequency synthesizer with a filtered error signal, so that based upon said filtered error signal it generates a local clock synchronized to the client's clock.

The inventive method may comprise other characteristics, which may be taken separately or in combination, and particularly:
- on the sending end, each timestamp may be representative of the time position of an edge (rising or falling) of the client's clock;
- on the sending end, each phase of the clients clock may, for example, be estimated by oversampling a local clock whose frequency makes it possible to obtain a frequency for generating timestamps which are nominally greater than the phase-locked loop or PLL on the receiving end;
- on the sending end, it is also possible to generate phase information related to the estimated phase, then to transmit this phase information to the receiving device, via the network, at roughly the same time as the corresponding information. In such a case, the digital frequency synthesizer of the receiving device adapts the frequency of the local clock based on the phase information that it has received.

The invention further discloses a device dedicated to providing information about the clock of a client which is using a transport protocol (chosen from a set) to carry signals between devices via a communication network suitable for transporting signals over every transport protocol in the set.

This providing device is characterized by the fact that it comprises estimation means tasked with estimating the phase of the client's clock and generating, for a transmitting device, at least first samples of a timestamp representing that estimated phase, so that it may transmit them to a receiving device, via the network.

The inventive device may comprise other characteristics, which may be taken separately or in combination, and particularly:
- its estimation means may be tasked with defining timestamps which are each representative of the time position of an edge of the client's clock.
- its estimation means may be tasked with estimating each phase of the client's clock by oversampling a local clock frequency makes it possible to obtain a frequency for generating timestamps which are nominally greater than the phase-locked loop (or PLL) on the receiving end;
- its estimation means may also be tasked with generating phase information related to the estimated phase, so that the transmitting device may transmit this phase information to the receiving device, via the network, at roughly the same time as the corresponding first samples.

The invention further discloses a device dedicated to reconstructing the clock of a client which is using a transport protocol (chosen from a set) to carry signals between devices via a communication network suitable for transporting signals over every transport protocol in the set.

This reconstruction device is characterized by the fact that it comprises:
- a digital frequency synthesizer tasked with generating a local clock frequency based on a filtered error signal,
- calculation means tasked, when they receive first samples generated by an information-providing device of the type described above, with i) determining the difference between the estimated phase (which is represented by these received first samples), and the local clock phase which is represented by a timestamp defined by second samples, and ii) generating a sampled error signal representing this difference in phase, and
- filtering means tasked with filtering the error signal by frequency so as to deliver a filtered error signal, and to supply the digital frequency synthesizer with this filtered error signal so that it may generate, based on this filtered error signal, a local clock synchronized to the client's clock.

This reconstruction device may also comprise auxiliary means tasked with determining the timestamp which represents the local clock phase and delivering this timestamp in the form of second samples.

Furthermore, the digital frequency synthesizer may, for example, adapt the frequency of the local clock based on phase information which relates to the estimated phase of the client's clock, and which were generated by the information-providing device and received at roughly the same time as the corresponding first samples.

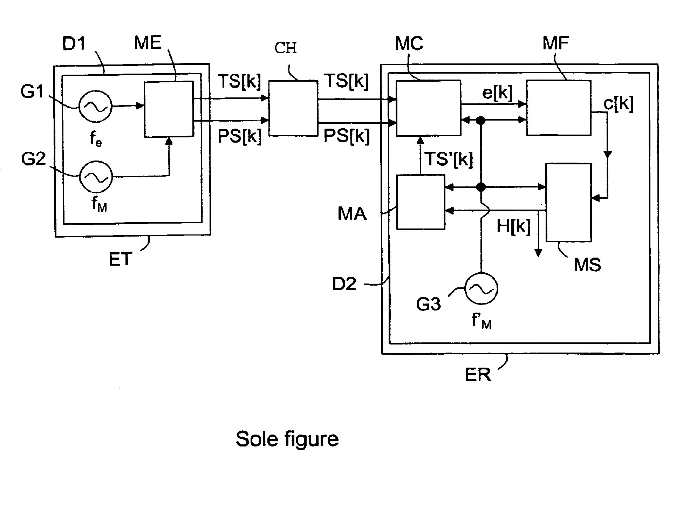

Other characteristics and advantages of the inventions will become apparent upon examining the detailed description below, and the attached drawing, in which the sole figure schematically depicts a transmitting device equipped with an example embodiment of an inventive information-providing device coupled, via an traffic-aggregating optical communication network, with a receiving device equipped with an example embodiment of an inventive reconstruction device.

The attached drawing may not only serve to complete the invention, but also to contribute to defining it, if need be.

The object of the invention is to enable a receiving device, which is connected to a communication network suitable for transporting multiplexed signals using multiple transport protocols, to reconstruct the clock of at least one client which uses one of these transport protocols to transmit data.

It what follows, it is assumed by way of a non-limiting example that the communication network is a (D)WDM optical network suitable for transporting optical signals using the SONET/SDH, Ethernet, and Fibre Channel transport protocols. However, the invention is not limited to this set of transport protocols. In reality, it pertains to any network suitable for aggregating traffic (or services) which are to be transported using at least two different transport protocols, independent of the modulation used, and in particular single-wavelength optical fiber networks, optical networks which transmit over an air interface, and radio networks.

As depicted in the sole figure, the implementation of the invention requires at least one transmitting device ET coupled, via a channel CH of a communication network (here a (D)WDM network), with at least one receiving device ER. The transmitting device ET is tasked with transmitting wavelength-multiplexed optical signals representative of multiple clients' data, which use different transport protocols, to the receiving device. A client's data is transmitted at a specific pace, which is defined by that client's clock. Consequently, the transmitting device ET also transmits to the receiving device ER optical signals which are representative of each client's clock phase.

In order to be able to retrieve the data pertaining to at least one of the network's clients, the receiving device ER must have a local clock of the client H[k] which must be synchronized to the clock of that same client which was used by the transmitting device ET.

The invention acts on both the sending side (ET) for providing information related to each client clock used by a transmitting device ET, and on the receiving side (ER) for reconstructing the local clock of at least one of the clients.

To that end, the invention firstly proposes to install an information-providing device D1 within a transmitting device ET, or to couple said devices to one another.

This information-providing device D1 comprises an estimation module ME, which is firstly tasked with estimating the phase of at least one client's clock. To achieve this, it is coupled to a first frequency generator G1, which delivers a clock signal at the frequency fₑ of the client in question, and a second frequency generator G2, which delivers a clock signal at the local frequency f_{M} of a processing machine.

When the frequency fₑ of a client's clock signal is less than the system frequency, the estimation module ME may, for example, estimate the client's clock phase by oversampling a local clock whose frequency makes it possible to obtain a frequency for generating timestamps which are nominally greater than the phase-locked loop, or PLL, on the receiving end;

Once the estimation module ME has estimated a clients clock phase, it determines a timestamp representative of that estimated phase. For example, the timestamp is representative of the timestamp of a rising or falling edge of the client's clock. The so-called timestamping technique, as it is well known to a person skilled in the art, will not be described again here.

Additionally, the estimation module EM samples this timestamp so that it is represented by the first samples TS[k]. It then communicates these first samples TS[k] to its transmitting device ET so that it may transmit them to the receiving device ER, via the network's channel CH, in addition to the multiplexed traffic data.

It should be understood that the transmitting device ET transmits all of the first samples TS[k] which correspond to all of the clients of the network whose traffic is aggregated (through multiplexing) within a single transmission stream.

Preferentially, the estimation module ME also generates phase information PS[k] which pertains to the phase that it estimated. For example, this phase for example may be what a person skilled in the art calls the phase slope. This phase information PS[k] is intended to enable a receiving device ER to take into account the jitter that may be introduced on the receiving end subsequent to the movements of SDH frame pointers whose subassemblies, known as VC4, are preferentially used for transmitting the first samples TS[k] (which are representative of timestamps).

The estimation module ME communicates this phase information PS[k] to its transmitting device ET so that it may transmit them to the receiving device ER via the network's channel CH, in addition to, and at the same time as, the first samples TS[k].

On the receiving end (ER), a reconstruction device D2 processes and uses first samples TS[k], and potentially additional phase information PS[k]. This reconstruction device D2 is installed within the receiving device ER, or these two devices are coupled to one another.

As depicted in the sole figure, a reconstruction device D2, in accordance with the invention, comprises at least one digital frequency synthesizer MS, a calculating module MC and a filtering module MF.

The digital frequency synthesizer MS is tasked with generating a frequency for a local clock H[k] of at least one network client, based on a filtered error signal c[k], which will be mentioned later. This local clock H[k], once it is synchronized to the clock of the client in question (and therefore reconstructed), is used by the receiving device ER to retrieve the data which are specific to that client and which are transmitted by the transmitting device ET, in multiplexed form, via the channel CH of the network.

This digital frequency synthesizer MS is preferentially a direct digital-frequency synthesizer (or DDS). As a reminder, this sort of synthesizer is a sort of voltage-controlled oscillator (or VCO) capable of generating clock signals of any frequency.

DDS technology consists of filling a random-access memory (RAM) with a table of values representing the sine function y = sinx, then reading the values stored according to frequency known as the system frequency, and reading the values read in a digital/analog converter at the output of which a sine function is found which is transformed into square-form clock signals by means of a comparator. The random-access memory (RAM) is tasked, based on the desired output frequency, with calculating the ration between that output frequency and the system frequency. The values of the table which is stored in random-access memory (RAM) may be modified in real time in order to follow an instruction.

To operate, the digital frequency synthesizer MS must therefore receive a filtered error signal c[k], which constitutes an instruction, and a clock signal at the same local receiving machine frequency f'_{M}, which is generated by a local generator G3. The frequencies f_{M} and f'_{M} are at the same nominal frequency.

It will also be noted, as shown, that the local generator G3 also, and simultaneously, provides the clock signal at the local receiving frequency f'_{M} to the calculating module MC, the filtering module, and an auxiliary module MA.

The calculating module MC becomes involved every time its receiving device ER receives first samples TS[k], as well as any phase information PS[k].

This intervention consists of determining the difference between the estimated phase, which is represented by the received first samples TS[k], and the phase of the local clock H[k], which is generated by the digital frequency synthesizer MS. This phase of the local clock H[k] is represented by a timestamp, which is defined by second samples TS'[k], and which is of the same type as the one which is represented by the received first samples TS[k]. Consequently, this timestamp may, for example, be representative of the temporal position of a rising or falling edge of the local clock H[k] of the client in question.

As shown in the sole figure, these second samples TS'[k], which represent a timestamp associated with the local clock H[k], may, for example, be generated by the auxiliary module MA. This module is partially similar to the estimation module ME of the information-providing device D1. More precisely, this auxiliary module MA receives the local clock H[k] of the client in question, which is delivered by the digital frequency synthesizer MS, and the clock signal at the local receiving frequency f'_{M}, which is generated by the local generator G3, and determined based on this client's local clock H[k] and on this local receiving frequency f'_{M}, a timestamp representing the phase of this local clock H[k]. For example, the timestamp is representative of the timestamp of a rising or falling edge of the client's clock. Next, the auxiliary module MA samples this timestamp so that it is represented by second samples TS'[k]. It then communicates these second samples TS'[k] to the calculating module MC.

Once the calculating module MC has first samples TS[k] and second samples TS'[k] corresponding to a single client, it determines, as indicated above, the difference between the estimate phase (represented by the first samples TS[k]) and the phase of the local clock H[k], then it generates a sampled error signal e[K] representing this phase difference, which it communicates to the filtering module MF.

It should be noted that the calculating module MC may potentially use any phase information PS[k] that may be associated with the first samples TS[k] to accurately determine the frequency or pace of the client's clock. In fact, by comparing multiple differences in successive phases related to a single client's clock, the calculating module MC may check whether the frequency of said client's local clock H[k] is the same as the one used by that same client's information-providing device D1. If it isn't, it notifies the digital frequency synthesizer MS so that it may correct the frequency or pace of the local clock H[k] of the client in question.

The filtering module MF is tasked with filtering the error signal e[k] by frequency, which is communicated by the calculating module MC, in order to supply the digital frequency synthesizer MS with a filtered error signal c[k]. More precisely, the filtering module MFs eliminates from the error signal e[k] the frequency components which are too high, in order to deliver a filtered, slow-changing error signal c[k] similar to what conventionally occurs in a phase-locked loop, or PLL.

The filtering module MF communicates each filtered error signal c[k], which it determines for a given client, to the digital frequency synthesizer MS which is change of that client. The digital frequency synthesizer MS then performs an analog/digital conversion on the filtered error signal c[k], by subtracting the phase difference which it represents, and generates (reconstructs) a local clock H[k] synchronized to the client's clock, taking into account this difference in phase, as well as any requests made to change the frequency (communicated by the calculating module MC).

The inventive information-providing device D1 and reconstruction device D2 may both be constructed in the form of a combination of electronic circuits and software (or computing) modules.

It is important to note that the invention can also be considered to be a reconstruction method that may particularly be implemented by means of the information-providing device D1 and reconstruction device D2 mentioned above. The functionalities afforded by implementing the inventive method being identical to those afforded by the network elements and devices (particularly the information-providing device D1 and the reconstruction device D2) given above, only the combination of the main functionalities afforded by the method is described above.

This reconstruction method consists of:
- on the sending end (ET), estimating the phase of the client's clock, in such a way as to generate at least the first samples TS[k] of a timestamp which represents that estimated phase, then transmitting these first samples TS[k] to a reception device [ER], via the network, and
- when the first samples TS[k] are received in the receiving device ER, i) determining the difference between the estimated phase (which is represented by the received first samples TS[k]), and the phase of a local clock H[k] (whose frequency is generated by a digital frequency synthesizer MS), with this latter phase being represented by a timestamp defined by second samples TS'[k]; ii) generating a sampled error signal e[k] representative of this difference in phase, and iii) filtering this error signal e[k] by frequency in such a way as to supply the digital frequency synthesizer MS with a filtered error signal c[k], so that based upon said filtered error signal c[k] it generates a local clock H[k] synchronized to the clients clock.

The invention affords some advantages, including:
- lower costs, as a result of a reduction in the time needed to develop processing cards (or boards) for multiple applications.
- greater integration of processing cards and less power consumed by them,
- easy upgradeability of the functionalities of the circuits in the presence of changes in the type of port and/or communication standards and/or special processing required by various clients.

The invention is not limited to the embodiments of the reconstruction method, information-providing device, and reconstruction device described above, which are given only by way of example; rather, it encompasses all variants that a person skilled in the art may envision within the framework of the claims below.

## Claims

1. A method for reconstructing a client's clock of a client using a transport protocol, chosen from a set, for carrying signals between devices (ET, ER) via a communication network capable of transporting multiplexed signals using each one of the protocols of said set, comprising
- on the sending end (ET), estimating the phase of the client's clock, in such a way as to generate at least first samples (TS[k]) of a timestamp representing said estimated phase, then transmitting said first samples (TS[k]) to a reception device (ER), via said network, and **characterized in that** it comprises:
- in case said first samples (TS[k]) are received in the receiving device (ER), i) determining the difference between the estimated phase represented by said received first samples (TS[k]), and the phase of a local clock (H[k]) of said client, the frequency of which is generated by a digital frequency synthesizer (MS), represented by a timestamp defined by second samples (TS'[k]; ii) generating a sampled error signal (e[k]) representing said difference in phase, and iii) filtering said error signal (e[k]) by frequency in such a way as to supply the digital frequency synthesizer (MS) with a filtered error signal (c[k]), such that based upon said filtered error signal (c[k]) it generates the local clock (H[k]) of said client synchronized to the client's clock.

2. A method according to claim 1, **characterized in that** on the sending side (ET), each timestamp is representative of the temporal position of an edge of the client's clock.

3. A method according to either claim 1 or 2, **characterized in that** on the sending end (ET), each phase of the clients clock is estimated by oversampling a local clock the frequency of which allows to obtain a frequency for generating timestamps which are nominally greater than the phase-locked loop on the receiving end.

4. A method according to one of claims 1 to 3, **characterized in that** on the sending end (ET), phase information is generated related to said estimated phase, then this phase information is transmitted to said receiving device (ER), via said network, at roughly the same time as said corresponding first samples, and said digital frequency synthesizer (MS) of the receiving device (ER) adjusts the frequency of the local clock (H[k]) based on said phase information.

5. A system for providing information related to a client's clock of a client using a transport protocol, chosen from a set, for transporting signals between transmitting and receiving devices (ET, ER) comprised in said system and being capable of transporting multiplexed signals via a communication network using each one of the transport protocols of said set, wherein the transmitting device (ET) comprises estimation means (ME) configured to estimate the phase of the client's cl3ock and to generate, for said transmitting device (ET), at least first samples of a timestamp (TS[k]) representing said estimated phase, so as to enable said transmitting device to transmit said first samples to said receiving device (ER), via said network, and **characterized in that** said receiving device (ER) is configured to use said at least first samples of a timestamp (TS[k]) representing said estimated phase to generate a sampled error signal (e[k]) representative of a difference in phase between the estimated phase, represented by the received first samples (TS[k]), and a phase of a local clock of said client, represented by a timestamp defined by second samples (TS'[k]).

6. A system according to claim 5, **characterized in that** said estimation means (ME) are configured to set timestamps which are each representative of the time position of an edge of the client's clock.

7. A system according to either claim 5 or 6, **characterized in that** said estimation means (ME) are configured to estimate each phase of the client's clock by oversampling a local clock the frequency of which allows to obtain a frequency for generating timestamps which are nominally greater than the phase-locked loop on the receiving end.

8. A system according to any one of claims 5 to 7, **characterized in that** said estimation means (ME) are also configured to generate phase information related to said estimated phase, so that said transmitting device (ET) may transmit this phase information to said receiving device (ER), via said network, at substantially the same time as said corresponding first samples.

9. A device (D2) for reconstructing a clients clock using a transport protocol, chosen from a set, for carrying signals between devices (ET, ER) via a communication network capable of transporting multiplexed signals using each one of the protocols of said set, **characterized in that** it comprises:
- a digital frequency synthesizer (MS) configured to generate a frequency for a local clock (H[k]) of said client based on a filtered error signal (c[k]),
- calculation means (MC) configured, in case of reception of first samples (TS[k]) , i) to determine the difference between the estimated phase, represented by the received first samples (TS[k]), and the phase of said local clock (H[k]) of said client, represented by a timestamp defined by second samples (TS'[k]), and ii) to generate a sampled error signal (e[k]) representative of said difference in phase, and
- filtering means (MF) configured to filter said error signal (e[k]) in frequency, so as to deliver a filtered error signal (c[k]), and to supply said digital frequency synthesizer (MS) with the filtered error signal (c[k]), such that it generates, based on the filtered error signal (c[k]), the local clock (H[k]) of said client synchronized to the clients clock.

10. A device according to claim 9, **characterized in that** it comprises auxiliary means (MA) configured to determine the timestamp that represents the phase of said local clock (H[k]) and to deliver this timestamp in the form of second samples (TS'[k]).

11. A device according to either claim 9 or 10, **characterized in that** said digital frequency synthesizer (MS) is configured to adjust the frequency of the local clock (H[k]) as a function of phase information related to the estimated phase of the clients clock, generated by said device for providing instruction (D1) and received at substantially the same time as the corresponding first samples (TS[k]).

## Patentansprüche

1. Verfahren zur Rekonstruktion eines Client-Taktes eines Clients, welcher ein aus einem Satz ausgewähltes Transpartprotokoll für den Transport von Signalen zwischen Vorrichtungen (ET, ER) über ein Kommunikationsnetzwerk, welches fähig ist, gemultiplexte Signale unter Verwendung eines jeden der Protokolle des besagten Satzes zu transportieren, verwendet, umfassend:
- Auf der Senderseite (ET), Schätzen der Phase des Client-Taktes, um zumindest erste Abtastwerte (TS[k]) eines Zeitstempels, welcher die besagte geschätzte Phase darstellt, zu erzeugen, und anschließend Übertragen der besagten ersten Abtastwerte (TS[k]), über das besagte Netzwerk, an eine Empfangseinrichtung (ER), und **dadurch gekennzeichnet, dass** es umfasst:
- wenn die besagten ersten Abtastwerte (TS[k]) an der Empfangsvorrichtung (ER) empfangen werden, i) Ermitteln der Differenz zwischen der durch die besagten empfangenen ersten Abtastwerte (TS[k]) dargestellten geschätzten Phase und der Phase eines lokalen Taktes (H[k]) des besagten Clients, dessen Frequenz durch einen digitalen Frequenzsynthesizer (MS), dargestellt durch einen von zweiten Abtastwerten (TS[k]) definierten Zeitstempel, erzeugt wird; ii) Erzeugen eines abgetasteten Fehlersignals (e[k]), welches die besagte Phasendifferenz darstellt, und iii) Filtern des besagten Fehlersignals (e[k]) in der Frequenz, derart, dass ein gefiltertes Fehlersignal (c[k]) an den digitalen Frequenzsynthesizer (MS) bereitgestellt wird, so dass er basierend auf dem besagten gefilterten Fehlersignal (c[k]) den lokalen Takt (H[k]) des besagten Clients synchron zum Client-Takt erzeugt.

2. Verfahren nach Anspruch 1, **dadurch gekennzeichnet, dass**, auf der Senderseite (ET), jeder Zeitstempel für die zeitliche Position einer Flanke des Client-Taktes repräsentativ ist.

3. Verfahren nach entweder Anspruch 1 oder Anspruch 2, **dadurch gekennzeichnet, dass**, auf der Senderseite (ET), jede Phase des Client-Taktes durch Überabtastung eines lokalen Taktes, dessen Frequenz es ermöglicht, eine Frequenz für die Erzeugung von Zeitstempeln, welche nennenswert größer als die Phasenregelschleife auf der Empfängerseite ist, zu erhalten, geschätzt wird.

4. Verfahren nach einem der Ansprüche 1 bis 3, **dadurch gekennzeichnet, dass**, auf der Senderseite (ET), Phaseninformationen in Bezug auf die besagte geschätzte Phase erzeugt werden und diese Phaseninformationen anschließend über das besagte Netzwerk annähernd gleichzeitig mit den besagten entsprechenden ersten Abtastwerten an die besagte Empfangsvorrichtung (ER) übertragen werden, und dass der besagte digitale Frequenzsynthesizer (MS) der besagten Empfangsvorrichtung (ER) die Frequenz des lokalen Taktes (H[k]) auf der Basis der besagten Phaseninformationen anpasst.

5. System zur Bereitstellung von Informationen in Bezug auf einen Client-Takt eines Clients, welcher ein aus einem Satz ausgewähltes Transportprotokoll für den Transport von Signalen zwischen Übertragungs- und Empfangsvorrichtungen (ET, ER), welche dem besagten System angehören und für den Transport von gemultiplexten Signalen unter Verwendung eines jeden der Protokolle des besagten Satzes über ein Kommunikationsnetzwerk ausgelegt sind, verwendet, wobei die Übertragungsvorrichtung (ET) Schätzmittel (ME) umfasst, die für das Schätzen der Phase des Client-Taktes und für das Erzeugen, für die besagte Übertragungsvorrichtung (ET), von zumindest ersten Abtastwerten eines Zeitstempels (TS[k]), welche die besagte geschätzte Phase darstellen, konfiguriert sind, um es der besagten Übertragungsvorrichtung zu ermöglichen, die besagten ersten Abtastwerte über das besagte Netzwerk an die besagte Empfangsvorrichtung (ER) zu übertragen, und **dadurch gekennzeichnet, dass** die besagte Empfangsvorrichtung (ER) für die Verwendung der besagten zumindest ersten Abtastwerte eines Zeitstempels (TS[k]), welche die besagte geschätzte Phase darstellen, konfiguriert ist, um ein abgetastetes Fehlersignal (e[k]), welches für eine Phasendifferenz zwischen der geschätzten Phase, dargestellt durch die empfangenen ersten Abtastwerte (TS[k]), und einer Phase eines lokalen Taktes des besagten Clients, dargestellt durch einen zweiten Abtastwerten (TS'[k]) definierten Zeitstempel, zu erzeugen.

6. System nach Anspruch 5, **dadurch gekennzeichnet, dass** die besagten Schätzmittel (ME) für das Setzen von Zeitstempeln, welche für die zeitliche Position einer Flanke des Client-Taktes repräsentativ sind, konfiguriert sind.

7. System nach entweder Anspruch 5 oder Anspruch 6, **dadurch gekennzeichnet, dass** die besagten Schätzmittel (ME) für das Schätzen einer jeden Phase des Client-Taktes durch Überabtastung eines lokalen Taktes, dessen Frequenz es ermöglicht, eine Frequenz für die Erzeugung von Zeitstempeln zu erhalten, welche nennenswert größer als die Phasenregelschleife auf der Empfängerseite sind, konfiguriert sind.

8. System nach einem beliebigen der Ansprüche 5 bis 7, **dadurch gekennzeichnet, dass** die besagten Schätzmittel (ME) ebenfalls für das Erzeugen von Phaseninformationen in Bezug auf die besagte geschätzte Phase konfiguriert sind, so dass die besagte Übertragungsvorrichtung (ET) diese Phaseninformationen zur im Wesentlichen selben Zeit wie die besagten entsprechenden ersten Abtastwerte über das besagte Netzwerk an die besagte Empfangsvorrichtung übertragen kann.

9. Vorrichtung (D2) zur Rekonstruktion eines Client-Taktes eines Clients, welcher ein aus einem Satz ausgewähltes Transportprotokoll für den Transport von Signalen zwischen Vorrichtungen (ET, ER) über ein Kommunikationsnetzwerk, welches fähig ist, gemultiplexte Signale unter Verwendung eines jeden der Protokolle des besagten Satzes zu transportieren, verwendet, umfassend:
- Einen digitalen Frequenzsynthesizer (MS), welcher dafür konfiguriert ist, eine Frequenz für einen lokalen Takt (H[k]) des besagten Clients auf der Basis eines gefilterten Fehlersignals (c[k]) zu erzeugen,
- Berechnungsmittel (MC), welche dafür konfiguriert sind, im Fall des Empfangs von ersten Abtastwerten (TS[k]), i) die Differenz zwischen der geschätzten Phase, dargestellt durch die empfangenen ersten Abtastwerte (TS[k]), und der Phase des besagten lokalen Taktes (H[k]) des besagten Clients, dargestellt durch einen von zweiten Abtastwerten (TS'[k]) definierten Zeitstempel, zu ermitteln, und ii) ein abgetastetes Fehlersignal (e[k]), welches für die besagte Phasendifferenz repräsentativ ist, zu erzeugen, und
- Filtermittel (MF), welche dafür konfiguriert sind, das besagte Fehlersignal (e[k]) in der Frequenz zu filtern, um ein gefiltertes Fehlersignal (c[k]) zu liefern, und das besagte gefilterte Fehlersignal (c[k]) an den besagten digitalen Frequenzsynthesizer (MS) bereitzustellen, so dass er auf der Basis des gefilterten Fehlersignals (c[k]) den lokalen Takt (H[k]) des besagten Clients synchron zum Client-Takt erzeugt.

10. Vorrichtung nach Anspruch 9, **dadurch gekennzeichnet, dass** sie Hilfsmittel (MA) umfasst, welche für das Bestimmen des Zeitstempels, der die Phase des besagten lokalen Taktes (H[k]) darstellt, und für das Bereitstellen des Zeitstempels in der Form von zweiten Abtastwerten (TS'[k]) konfiguriert sind.

11. Vorrichtung nach entweder Anspruch 9 oder Anspruch 10, **dadurch gekennzeichnet, dass** der digitale Frequenzsynthesizer (MS) dafür konfiguriert ist, die Frequenz des lokalen Taktes (H[k]) in Abhängigkeit von Phaseninformationen in Bezug auf die geschätzte Phase des Client-Taktes, welche von der besagten Vorrichtung für die Bereitstellung von Befehlen (D1) erzeugt und zur im Wesentlichen selben Zeit wie die entsprechenden ersten Abtastwerte (TS[k]) empfangen werden, anzupassen.

## Revendications

1. Procédé de reconstruction de l'horloge client d'un client au moyen d'un protocole de transport choisi parmi un ensemble, pour transporter des signaux entre des dispositifs (ET, ER) via un réseau de communication, capables de transporter des signaux multiplexés au moyen de chacun des protocoles dudit ensemble, comprenant les étapes suivantes :
- à l'extrémité d'envoi (ET), estimation de la phase de l'horloge du client, de manière à générer au moins des premiers échantillons (TS[k]) d'une estampille temporelle représentant ladite phase estimée, puis transmission desdits premiers échantillons (TS[k]) à un dispositif de réception (ER) via ledit réseau, et **caractérisé en ce qu'**il comprend les étapes suivantes :
- au cas où lesdits premiers échantillons (TS[k]) sont reçus dans le dispositif de réception (ER), i) détermination de la différence entre la phase estimée représentée par lesdits premiers échantillons reçus (TS[k]) et la phase d'une horloge locale (H[k]) dudit client, dont la fréquence est générée par un synthétiseur de fréquence numérique (MS), représentée par une estampille temporelle définie par des seconds échantillons (TS'[k]), ii) génération d'un signal d'erreur échantillonné (e[k]) représentant ladite différence de phase, et iii) filtrage dudit signal d'erreur (e[k]) en fréquence de manière à fournir au synthétiseur de fréquence numérique (MS) un signal d'erreur filtré (c[k]), de telle sorte que sur la base dudit signal d'erreur filtré (c[k]), il génère l'horloge locale (H[k]) dudit client synchronisée avec l'horloge du client.

2. Procédé selon la revendication 1, **caractérisé en ce que** sur le côté d'envoi (ET), chaque estampille temporelle est représentative de la position temporelle d'une transition de l'horloge du client.

3. Procédé selon l'une des revendications 1 et 2, **caractérisé en ce que**, à l'extrémité d'envoi (ET), chaque phase de l'horloge du client est estimée en suréchantillonnant une horloge locale dont la fréquence permet d'obtenir une fréquence de génération d'estampilles temporelles qui sont nominalement supérieures à la boucle à verrouillage de phase sur l'extrémité de réception.

4. Procédé selon l'une des revendications 1 à 3, **caractérisé en ce que** sur l'extrémité d'envoi (ET), l'information de phase est générée relativement à ladite phase estimée, puis cette information de phase est transmise audit dispositif de réception (ER) via ledit réseau, environ en même temps que lesdits premiers échantillons correspondants, et ledit synthétiseur de fréquence numérique (MS) du dispositif de réception (ER) ajuste la fréquence de l'horloge locale (H[k]) sur la base de ladite information de phase.

5. Système de production d'informations relatives à l'horloge client d'un client au moyen d'un protocole de transport choisi parmi un ensemble, pour transporter des signaux entre des dispositifs d'émission et de réception (ET, ER) compris dans ledit système et capables de transporter des signaux multiplexés via un réseau de communication au moyen de chacun des protocoles de transport dudit ensemble, dans lequel le dispositif d'émission (ET) comprend des moyens d'estimation (ME) configurés pour estimer la phase de l'horloge du client et pour générer, pour ledit dispositif d'émission (ET), au moins des premiers échantillons d'une estampille temporelle (TS[k]) représentant ladite phase estimée, de manière à permettre audit dispositif d'émission de transmettre lesdits premiers échantillons audit dispositif de réception (ER) via ledit réseau, et **caractérisé en ce que** ledit dispositif de réception (ER) est configuré pour utiliser lesdits au moins premiers échantillons d'une estampille temporelle (TS[k]) représentant ladite phase estimée pour générer un signal d'erreur échantillonné (e[k]) représentatif d'une différence de phase entre la phase estimée, représentée par les premiers échantillons reçus (TS[k]) et une phase d'une horloge locale dudit client, représentée par une estampille temporelle définie par des seconds échantillons (TS'[k]).

6. Système selon la revendication 5, **caractérisé en ce que** lesdits moyens d'estimation (ME) sont configurés pour définir des estampilles temporelles qui sont représentatives de la position temporelle d'une transition de l'horloge du client.

7. Système selon l'une des revendications 5 et 6, **caractérisé en ce que** lesdits moyens d'estimation (ME) sont configurés pour estimer chaque phase de l'horloge du client en suréchantillonnant une horloge locale dont la fréquence permet d'obtenir une fréquence de génération d'estampilles temporelles qui sont nominalement supérieures à la boucle à verrouillage de phase sur l'extrémité de réception.

8. Système selon l'une des revendications 5 à 7, **caractérisé en ce que** lesdits moyens d'estimation (ME) sont également configurés pour générer une information de phase relative à ladite phase estimée, de sorte que ledit dispositif d'émission (ET) puisse transmettre ladite information de phase audit dispositif de réception (ER) via ledit réseau sensiblement en même temps que lesdits premiers échantillons correspondants.

9. Dispositif (D2) de reconstruction de l'horloge client d'un client au moyen d'un protocole de transport choisi parmi un ensemble, pour transporter des signaux entre des dispositifs (ET, ER) via un réseau de communication, capables de transporter des signaux multiplexés au moyen de chacun des protocoles dudit ensemble, **caractérisé en ce qu'**il comprend :
- un synthétiseur de fréquence numérique (MS) configuré pour générer une fréquence pour une horloge locale (H[k]) dudit client sur la base d'un signal d'erreur filtré (c[k]),
- des moyens de calcul (MC) configurés pour, en cas de réception de premiers échantillons (TS[k]), i) déterminer la différence entre la phase estimée, représentée par les premiers échantillons reçus (TS[k]) et la phase de ladite horloge locale (H[k]) dudit client, représentée par une estampille temporelle définie par des seconds échantillons (TS'[k]) et ii) générer un signal d'erreur échantillonné (e[k]) représentatif de ladite différence de phase, et
- des moyens de filtrage (MF) configurés pour filtrer ledit signal d'erreur (e[k]) en fréquence, de manière à délivrer un signal d'erreur filtré (c[k]) et à fournir audit synthétiseur de fréquence numérique (MS) le signal d'erreur filtré (c[k]) pour qu'il génère, sur la base du signal d'erreur filtré (c[k]), l'horloge locale (H[k]) dudit client synchronisée avec l'horloge du client.

10. Dispositif selon la revendication 9, **caractérisé en ce qu'**il comprend des moyens auxiliaires (MA) configurés pour déterminer l'estampille temporelle qui représente la phase de ladite horloge locale (H[k]) et pour délivrer cette estampille temporelle sous la forme de seconds échantillons (TS'[k]).

11. Dispositif selon la revendication 9 ou 10, **caractérisé en ce que** ledit synthétiseur de fréquence numérique (MS) est configuré pour ajuster la fréquence de l'horloge locale (H[k]) en fonction d'une information de phase relative à la phase estimée de l'horloge du client, générée par ledit dispositif pour donner des instructions (D1) et reçue sensiblement en même temps que les premiers échantillons correspondants (TS[k]).
